# EUROPEAN PATENT SPECIFICATION

(11) **EP 2 158 164 B1**
(45) Date of publication and mention of the grant of the patent: **12.10.2011**
(21) Application number: 08763878.9
(22) Date of filing: 23.05.2008
(51) Int. Cl.: C02F 1/72, C02F 1/32

(54) **WASTEWATER TREATMENT BY HIGH EFFICIENCY HETEROGENEOUS PHOTO-FENTON PROCESS**
ABWASSERBEHANDLUNG MITTELS EINES HOCHEFFIZIENTEN HETEROGENEN PHOTO-FENTON-VERFAHRENS
TRAITEMENT DES EAUX RÉSIDUAIRES PAR UN PROCÉDÉ DE PHOTO-FENTON HÉTÉROGÈNE À HAUT RENDEMENT

(30) Priority: 24.05.2007 IT SA20070020
(43) Date of publication of application: 03.03.2010
(73) Proprietor: Universita' Degli Studi di Salerno, 84084 Fisciano (SA) (IT)
(72) Inventor: SANNINO, Diana, I-84084 Fisciano (SA) (IT); CIAMBELLI, Paolo, I-84084 Fisciano (SA) (IT); RICCIARDI, Massimo, I-84087 Sarno (SA) (IT); ISUPOVA, Lyubov, Aleksandrovna, Novosibirsk 630090 (RU)
(74) Representative: Banchetti, Marina
(86) International application number: PCT/IT2008/000343
(87) International publication number: WO 2008/142724

(56) References cited:
- US-A1- 2003 031 585
- US-A1- 2006 076 299
- US-A1- 2006 138 057
- RICCIARDI M.: "PhD Thesis - Wastewater treatment by high efficiency heterogeneous photo-fenton process" [Online] 2006, UNIVERSITY OF SALERNO, SCHOOL OF ENGINEERING, DEPARMENT OF CHEMICAL AND FOOD ENGINEERING , SALERNO, ITALY , XP002496978 Retrieved from the Internet: URL:www.dica.unisa.it/td/td06_mr.pdf> [retrieved on 2008-09-22] page 23 page 25 pages 55-56 pages 93-147 & [Online] Website of the University of Salerno Retrieved from the Internet: URL:http://www.dica.unisa.it/default.asp?n av=doctorate&pos=Dettagli+Thesis&ID=40> [retrieved on 2008-09-22]
- PIRKANNIEMI K ET AL: "Heterogeneous water phase catalysis as an environmental application: a review" CHEMOSPHERE, PERGAMON PRESS, OXFORD, GB, vol. 48, 1 January 2002 (2002-01-01), pages 1047-1060, XP002428461 ISSN: 0045-6535
- COSTA ET AL: "Novel active heterogeneous Fenton system based on Fe3-xMxO4 (Fe, Co, Mn, Ni): The role of M<2+> species on the reactivity towards H2O2 reactions" JOURNAL OF HAZARDOUS MATERIALS, ELSEVIER, vol. 129, no. 1-3, 28 February 2006 (2006-02-28), pages 171-178, XP005306072 ISSN: 0304-3894

## Description

The present invention provides a wastewater treatment by high efficiency heterogeneous photo-Fenton process. More specifically, this invention concerns the photocatalytic degradation of organic contaminants in wastewater using the photo-Fenton system carried out heterogeneously, wherein a specific type of catalyst is used. The proposed method provides an effective technology of removal of organic pollutants without the production of sludges, without long start-up times and using economic and stable heterogeneous catalysts, either in powder or structured.

A known method to reduce the COD in effluent wastewater, normally referred to as the Fenton's method, involves adding hydrogen peroxide (H₂O₂) and iron(II) compounds to wastewater so that the organic pollutants contained in wastewater are oxidized by the hydroxyl free radicals (OH^{.}) produced by the reaction between hydrogen peroxide and the ferrous ion. The hydroxyl radicals act as strong oxidising agents, capable of degrading organic pollutants in a very short time. In practical applications, however, the Fenton's method is not completely satisfactory, also in view of the fact that in the Fenton reaction the overall oxidation rate is slowed down after conversion of Fe²+ to Fe³⁺, as the reduction of Fe³⁺ back to Fe²⁺ is much slower.

In order to overcome this problem, the application of UV-visible irradiation to the Fenton reaction system, resulting in the so-called photo-assisted Fenton reaction (or photo-Fenton system), regenerates ferrous ions (Fe³⁺) by photolysis of hydroxide complexes of Fe³⁺, yielding more hydroxyl radicals.

The photocatalytic degradation of organic contaminants using the photo-Fenton system is gaining importance in the Advanced Oxidation Technologies (AOTs). In spite of that, said method still has the disadvantage that significant amounts of iron(III) hydroxide sludge are produced, and said sludge needs to be further treated, thereby negatively affecting the overall costs of the treatment.

The homogeneous photo-Fenton system is widely studied and reported to be a promising method for wastewater treatment (Hislop, K. and Bolton, J. (1999), Environ. Sci. Technol., 33, 3119-3126; Trapido, M., Kallas, J., (2000), Environ. Technol. 21, 799-808; Vicente, J., Rosal, R. and Diaz, M. (2002), Ind. Eng. Chem. Res., 41, 46-51; Kavitha, V., Palanivelu, K. (2004). Chemosphere 55, 1235-1243). The major disadvantage of such a system lies in the fact that the reactions are to be studied at acidic pH (< 3). Moreover, it is difficult to remove the sludge containing Fe ions after the treatment.

A good alternative to the homogeneous photo-Fenton system can be the heterogeneous photocatalysis. The efficiency of this system is evaluated by measuring the acetic acid degradation at different experimental conditions. Various studies have been carried out on the heterogeneous photo-Fenton system; in particular, Fe over HY zeolite has been used for the degradation of polyvinyl alcohol (Bossmann, S.H., Oliveros, E., Gob, S., Kantor, M., Goppert, A., You, L., Yue, P.L., Braun, A.M. (2001), Water Sci. Technol. 44 (5), 257.262). A similar solution is proposed by the international patent application WO 2006/070384 (Council of Scientific and Industrial Research, IN), disclosing a heterogeneous Fe(III)-HY catalyst for photo-assisted Fenton reaction, where the ferrous ions are immobilized on HY zeolite using different loadings by impregnation.

The immobilization of Fe ions on particulate supports such as beads or granules, made of a material which can be partly of wholly a ion-exchanger material, such as Nafion^{®} for use in heterogeneous photo-assisted Fenton reactions has been proposed, specifically, in the US patent application US2003/0031585 (G.L.Puma). Nafion^{®} membranes as a photocatalyst for degradation of organic pollutants have also been reported (Maletzky, P.; Bauer, R.; Lahnsteiner, J.; Pouresmael, B. (1999), Chemosphere, 38(10), 2315-2325; Sabhi and Kiwi, (2001). Water Research 35 (8), 1994-2001).

The immobilization of Fe ions also on clays, bentonite and laponite for the oxidation of the azo dye Orange II has recentently been reported (Feng, J.; Hu, X.; Yue, P.L., (2005), Water Research 39, 89.96).

In view of the above, an object of the present invention is to develop an eco-friendly heterogeneous catalytic system for the photo-Fenton reaction, which is suitable to provide a remarkable increase of degree of mineralization of the organic pollutants with respect to the mineralization obtainable by the application of a homogeneous photo-Fenton method. In addition, the required method should provide a control of the degree of mineralization through the analysis of the gaseous stream evolved during the photo-Fenton oxidation. Further, the method sought for the treatment of wastewater should allow to recycle the catalyst with low costs, while avoiding the production of sludges.

To this end there is proposed, according to the present invention, to use heterogeneous catalysts, either in powder or structured, for the photo-Fenton oxidation of organic molecules present in the wastewater, including the poorly degradable or non-biodegradable pollutants, which heterogeneous catalysts are based on perovskites.

Perovskites are a known group of oxides owing their name to a calcium titanium oxide mineral (CaTiO₃, perovskite, named after the mineralogist who discovered it) that crystallizes in the orthorhombic crystal system. The perovskite structure is adopted by many oxides having the basic chemical formula ABO₃, where A and B are cations of different sizes, normally A being an alkali-earth metal ion (e.g. Mg, Ca, Ba, La, Sr) and B being a transition metal ion (e.g. Co, Ti, Mn, Si, Fe). It is known that perovskite materials have peculiar ferroelectric, magnetic, optoelectronic properties, and may be exploited as superconductors. Some of them are also used as catalyst electrodes in some types of fuel cells. Finally, materials belonging to the perovskite group are also useful as catalysts both in electrochemical reactions and in combustion reactions.

In view of the foregoing, the present invention proposes an eco-friendly photo-Fenton reaction for the destruction of pollutants in industrial effluents, which is based on the use of a stable heterogeneous photo-Fenton catalyst, in powder or, preferably, structured, having the perovskite crystal structure.

Therefore, the present invention specifically provides the use of a heterogeneous photo-Fenton catalyst for the degradation of organic compounds in wastewater by a photo-Fenton system, wherein said heterogeneous catalyst is a perovskite-based catalyst.

Specifically, said heterogeneous catalyst may be a structured honeycomb monolith consisting of a perovskite-based material or, in other cases, it may be a catalyst in powder form. In the preferred case where the perovskite-based photo-Fenton catalyst according to the invention is a structured catalyst, the latter may be a supported catalyst, namely consisting of a honeycomb monolith made of a refractory carrier or a foam impregnated with a solution of salts corresponding to the desired perovskite. Preferably, the refractory carrier is cordierite.

According to some specific embodiments of the invention, said refractory carrier or foam of the supported catalyst is further impregnated with a solution of noble metal, specifically Pt.

Alternatively, structured catalysts consists of perovskite powders, also ultradispersed by a mechanochemical method starting from oxides or carbonate precursors and formed as honeycomb. Said honeycomb monolith catalysts are prepared by extrusion of plastic pastes of perovskite powders and additives, such as alumina binder, ceramic fibers, acid peptizer and ethylene glycol.

The perovskite loading on the catalyst not supported is in the range 2-90 wt%, preferably in the range 45-90 % and more preferably 48% or 88%.

The perovskite loading on the supported catalyst is in the range 2-30 wt%, preferably in the range 3-10 wt% and more preferably 4% wt.

The noble metal (Pt) loading on the supported catalyst is in the range 0.05-10 wt%, preferably in the range 0.05-3 % and more preferably 0.1 wt%.

According to some embodiments thereof, the present invention concerns the use of heterogeneous photo-Fenton catalysts based on perovskite, wherein said perovskite has the formula LnFeO₃ and Ln is an element selected from the group III B of the periodic table of elements, including lanthanoids, which are also known as rare earth elements (such as La, Ce, Y, or Sc) or a mixture thereof.

According to another group of embodiments, the invention concerns the use of heterogeneous photo-Fenton catalysts based on perovskite, wherein said perovskite has the formula LaMeO₃, Me representing a transition element selected from the group consisting of Mn, Co, Fe, Ni and Cu or a mixture thereof.

Three types of catalysts have been employed in the experimentation that lead to the photo-Fenton process proposed according to the invention:
a) The bulk catalysts were prepared by kneading powdered mixed oxides of elements of rare earths (e.g. La, Ce, Y, etc.) and a transition metal (Fe) with an alumina-based binder (aluminium hydroxide) in acid media, followed by extrusion of the plastic pastes to obtain a monolith catalyst, drying at T=120°C and calcination at T=900 °C for 4 h. The catalytic activity of LnFeO₃ was studied by taking acetic acid as model compound. Different experimental parameters were studied to arrive at the optimal conditions for this reaction.
b) The supported catalysts have been prepared supporting the active phases on a refractory carrier (cordierite) or on foams based on alumina or SiC. Perovskites (LaMeO₃) with Me = Mn and/or Co and/or Fe and/or Ni and/or Cu were prepared by impregnation of monolithic honeycomb cordierite supports with solutions of nitrate metallic salts in ethylene glycol with added citric acid. The samples were taken out of the solution, dried in air and calcined at 900 °C for 4 h.
c) The supported catalyst prepared by the same method of the samples reported in b) with addition of Pt (H₂PtCl₆/LaMeO₃) has been prepared by wet impregnation from different salts on the substrate which was either pure or precovered by the oxide sublayer. After Pt loading, samples were either directly dried under air or, before drying, treated with hydrazine hydrate or other reducing species.

Thus, the present invention specifically provides heterogeneous photo-Fenton catalysts, in powder or in honeycomb monolith structured form, consisting of a perovskite (LnFeO₃)-based material, not supported, as well as heterogeneous catalysts in honeycomb monolith structured form, made of a perovskite-based material (LaMeO₃ or H₂PtCl₆/LaMeO₃, where Me= Mn, Co, Fe, Ni, Cu), supported on cordierite.

According to a further aspect thereof, the present invention provides a method for the heterogeneous photo-Fenton treatment of wastewaters to obtain the degradation of poorly degradable or non-biodegradable organics like acetic acid, and in general organic pollutants.

Specifically, there is proposed a method the treatment of wastewater by photocatalytic degradation of the organic contaminants contained therein, wherein said wastewater undergoes a photo-Fenton oxidation reaction, employing a heterogeneous catalyst, characterized in that said heterogeneous catalyst is a perovskite-based catalyst. As specified before, said heterogeneous catalyst may be a structured honeycomb monolith consisting of a perovskite-based material (non-supported catalyst), or it may be a supported catalyst, consisting of a structured honeycomb monolith made of a refractory carrier or a foam impregnated with a solution of salts corresponding to the desired perovskite. The further optional features of the concerned catalyst are already specified in the foregoing.

According to some preferred embodiments of the method of the invention, the photo-Fenton oxidation reaction is carried out at room temperature and atmospheric pressure. In other cases, however, said process may also be carried out at high temperature and pressure.

As pointed out before, one of the main advantages of the claimed process, as compared with homogeneous photo-assisted Fenton systems, is the possibility to employ a pH above the range allowed by the prior art (< 3). Actually, the claimed process may also be carried out at a pH of greater than 5.

The catalytic activity was studied by taking acetic acid as model compound. However, in further tests, the photo-Fenton catalyst according to the invention and the corresponding photocatalytic degradation method have been tested on a variety of organic pollutants, including MTBE, ethanol, methanol, their mixtures and synthetic winery wastewaters. The obtained results clearly indicated the advantage of using the perovskite-based catalysts in the photo-Fenton reaction. It has been shown experimentally that the presence of perovskite induces an improvement of the photo-degradation, due to adsorption of the pollutant molecules on the surface of the catalyst, and thus facilitates their removal due to the hydroxyl radicals formed by the photo-decomposition of H₂O₂.

Moreover, the effect of the dosage of H₂O₂ and the effect of the pH have been studied in the photo-Fenton reaction according to the invention. The increased rate of reaction highlights the synergic role of perovskite. In addition, the heterogeneous photo-Fenton reaction allows a wide range of pH for reaction against the narrow pH range possible in the homogeneous system. Finally, the leaching of the metals from the perovskite after the treatment has also been evaluated.

In some specific embodiments of the method proposed, the photo-Fenton oxidation reaction is carried out in a tubular fixed bed irradiated recirculated reactor, preferably sealed. The latter will be further illustrated with reference to the experimental and applicative section that follows.

Still according to the invention, in the method of treatment proposed, hydrogen peroxide is dosed to the photo-Fenton oxidation reaction during the process, thereby obtaining as a result a considerable improvement of the removal rate of the pollutants. Specifically, said dosing may be obtained through addition of small discrete volumes of concentrated H₂O₂ solution to said process at fixed intervals, or it may be obtained through continuous feeding of concentrated H₂O₂ solution to said process during the process.

The specific characteristics of the present invention, as well as its advantages and relative operational modalities, will be more evident with reference to the detailed description presented merely for exemplificative purposes below, along with the results of some experimentations carried out on it. Some schemes of equipment for the proposed process and some experimental results are also illustrated in the attached drawings, wherein:
Figure 1 shows the scheme of a single-pass reactor for the catalytic photo-Fenton oxidation according to the method of the invention;
**Figure 2** shows the scheme of a batch system for the catalytic photo-Fenton oxidation according to the method of the invention;
**Figure 3** shows the scheme of a laboratory apparatus for the catalytic photo-Fenton oxidation according to the method of the invention;
**Figure 4** shows the catalytic photo-Fenton oxidation of organic carbon in nitrogen stream on LaMnO₃ (3.67%) according to the invention, the experimental conditions being as follows: V tot.: 100 ml; m_{catalyst}= 4.9 g; C⁰_{CH3COOH}= 0.021 mol/l; C⁰_{H202}= 0.083 mol/l; P= 1 atm; T= 25°C; pH=3.9, Q_{N2}= 250 Ncc/min; and
**Figure 5** shows the evolution of carbon dioxide formed during the catalytic photo-Fenton oxidation in nitrogen stream on LaMnO₃ in the same conditions set with respect of **Figure 4**.

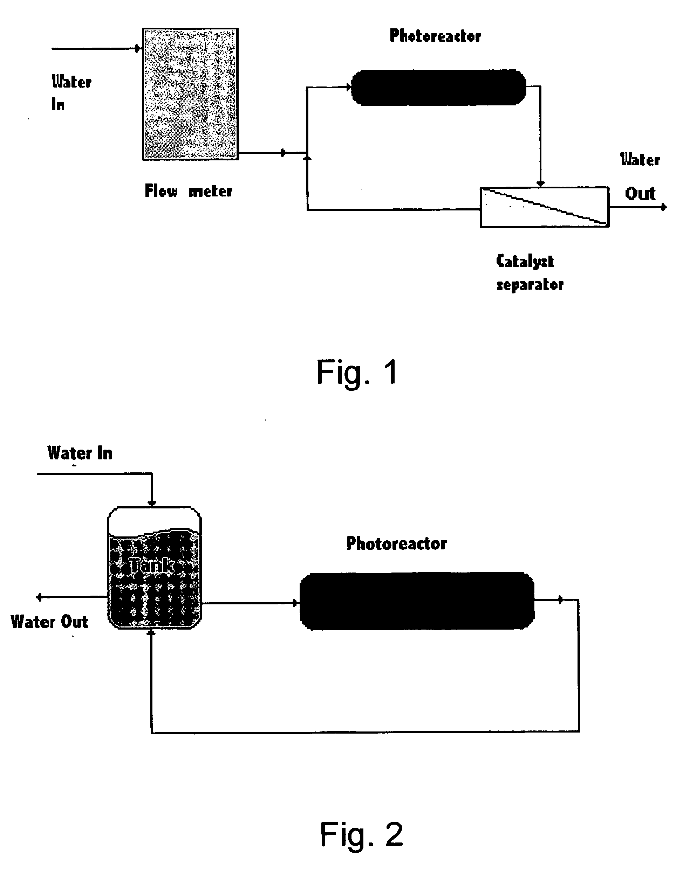

As shown in Figures 1 to 3, the apparatus for the photo-Fenton reaction needs technically simple equipment.

"Slurry" reactors can be used for the photo-Fenton reaction, with catalyst particles suspended in the contaminated water. The advantages of this system are mainly the following:
- good dispersion of the catalyst, whose particles are present with a high specific surface area;
- good irradiation of the catalyst;
- high efficiency of transfer of the pollutants by the fluid to the surface of the catalyst.

After this reaction, it is necessary to separate the product (purified water) from the catalyst particles. This requires the use of an additional separation unit which may be simple and cheap like a sedimentation unit or a filtering unit.

Also fixed bed catalyst reactors can be used for the photo-Fenton reaction, with catalyst in pellets or in structured kind like a honeycomb monolith, or in the foam form, or in the form of a thin film adherent to transparent mechanical supports. In this case a separation unit is not necessary.

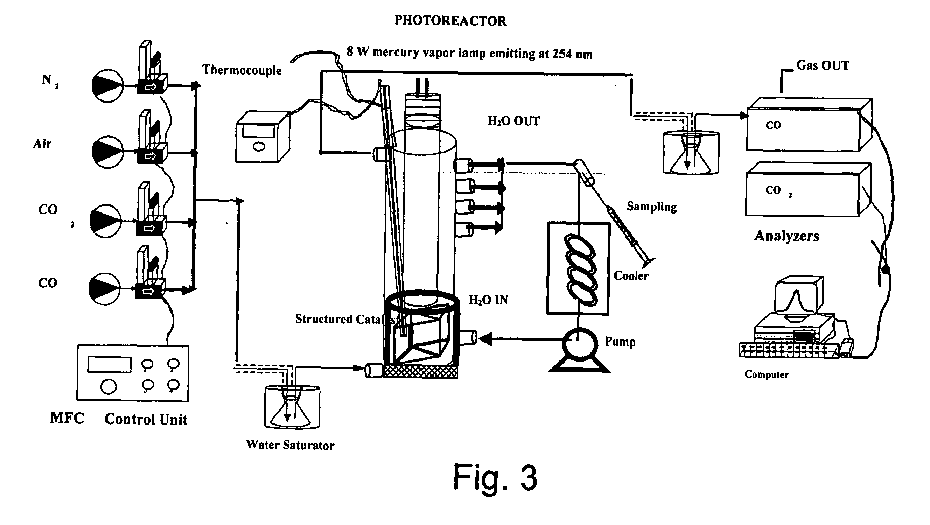

Moreover, the reactor for the heterogeneous photo-Fenton reaction according to the invention can be:
- a continuous "single pass" reactor, according to the scheme of **Figure 1**;
- a batch reactor, according to the scheme of **Figure 2**;
- a continuous recirculated reactor, according to the scheme of **Figure 3**.

In the single-pass reactor (**Figure 1**) the abatement of the pollutants is obtained by a single passage of the wastewater through the part of reactor which is irradiated by the light. In this case the control of the water flow rate must be optimized to obtain the purified water with the smaller possible length of the reactor.

In the batch reactor (**Figure 2**) the contaminated water is stored in a reservoir and continuously recirculated in the photoreactor.

Finally, the reaction unit of **Figure 3** is a tubular fixed bed catalyst structured reactor, irradiated, recirculated and sealed.

In the reaction system a source of UV light of a wavelength greater or equal to 254 nm is used.

To check the catalytic activity of the heterogeneous photo-Fenton catalyst according to the invention, 2.5 g of LaFeO₃ (2.24 %) honeycomb monolith catalyst was placed in 100 ml of acetic acid solution (0.021 M, total organic carbon (TOC) = 500 mg/l) and hydrogen peroxide (0.083 M) (molar ratio: H₂O₂/CH₃COOH=4) below the lamp in a sealed stainless photoreactor. Gases which evolved from the sealed photoreactor during the reaction were analysed in order to verify the mineralization degree. The initial pH of solution was equal to 3.9.

Prior to start of the light experiments, the solution was recirculated through the reactor in absence of irradiation for 10 min. The solution was irradiated by UV light of 8 W mercury vapour lamp and samples taken (very small samples of treated solution: 500 µl) at regular intervals. The samples were filtered and analyzed for the total organic carbon (TOC), by the method of catalytic combustion at T=850°C, and H₂O₂ analysis by H₂O₂/TiOSO₄ complex (A = 405 nm) UV-Vis analyses by using a PerkinElmer lambda 35 spectrophotometer.

A preliminary experiment on photolysis (CH₃COOH/H₂O₂/UV) shows a TOC removal of about 32%.

Whereas, in the presence of catalyst (perovskite) and UV light about 54% TOC removal is observed in absence of dosage of H₂O₂ and about 100% in presence of dosage of H₂O₂. In presence of light and H₂O₂ the rate of reaction was very fast. This enhanced rate of reaction is due to generation of OH^{.} radicals by the action of the catalyst. In absence of UV light there is a very small TOC removal.

Moreover, to compare the heterogeneous photo-Fenton reaction in presence of LaFeO₃ with that of a homogeneous system, ferric oxalate (C_{Fe3+}=0.0296 M) has been taken as homogeneous catalyst.

The data in **TABLE 1** below clearly show that the heterogeneous system improves the degree of total organic carbon removal as compared with the homogeneous system, with a better use of hydrogen peroxide. This difference may be seen as due to the adsorption of organic substance on the catalyst surface. In fact, adsorbed pollutant molecules on the catalyst surface are easily attacked by the generated OH' radicals and subsequently mineralized. Finally, a very small of dissolution of iron in the solution during the reaction is detected.

**TABLE 1**

| Effect of the various experimental parameters on the degradation of acetic acid (**A**) - UV+LaFeO₃+H₂O₂; (**B**). homogeneous photo-Fenton; (**C**). LaFeO₃+H₂O; (**D**) photolysis. | | | | |
|---|---|---|---|---|
| **Time, h** | **TOC removal,%** | | | |
| | **A** | **B** | **C** | **D** |
| 0 | 0 | 0 | 0 | 0 |
| 1 | 13 | 15 | 4 | 7 |
| 2 | 41 | 20 | 4 | 16 |
| 3 | 49 | 21 | 4 | 24 |
| 4 | 55 | 24 | 4 | 32 |

### EXAMPLES

Examples 1-5 show the results obtained for catalytic activity during the reaction of photo-Fenton oxidation using the LnFeO₃-based non-supported catalysts and the supported catalysts LaMnO₃, LaFeO₃, LaNiO₃, LaCoO₃, LaCuO₃ and H₂PtCl₆/LaMnO₃ -based.

### Materials and chemicals.

Glacial acetic acid (CH₃COOH) with a purity grade equal to 99.8% was provided by Carlo Erba, ferric oxalate (Fe₂(C₂O₄)₃·6H₂O) with a purity grade equal to 99% was provided by Aldrich, MTBE (CH₃OC(CH₃)₃), with purity grade equal to 99.9% was provided by Aldrich, H₂O₂ (35% w/w) was provided by Aldrich, ethanol (C₂H₅OH) with a purity grade equal to 99.9% was provided by J.T. Baker and methanol (CH₃OH) with a purity grade equal to 99.9% was provided by Aldrich.

The synthetic winery wastewater was prepared by diluting commercial red wine ("Chianti") with ultra-pure water, obtaining approximately the amount of organic matter equal to 500 mg C/I (as TOC). All solution were prepared with ultra-pure water (18 µS·cm⁻¹).

The monolithic honeycomb perovskite-based catalysts were developed at the Boreskov Institute of catalysis SB RAS are of the surface area equal to 4-6 m²/g for the supported catalysts and the surface area equal to 18 m²/g for the not-supported catalysts.

Solutions of organic compounds (es. CH₃COOH, CH₃OC(CH₃)₃, C₂H₅OH, CH₃OH and synthetic winery wastewater) and hydrogen peroxide were freshly prepared and used for the Fenton and photo-Fenton experiments. For the photo-Fenton experiments a UV source of 8 W mercury vapour lamp of wavelengths greater or equal to 254 nm was used. Prior to the start of light experiments the system was kept in the dark for 10 min under continuous stirring.

In a typical experiment an organic solution (e.g. CH₃COOH, CH₃OC(CH₃)₃, C₂H₅OH, CH₃OH) (500 mg/l as TOC) of 100 ml was taken in a photo-reactor and honeycomb monolith catalyst was added. Then a concentred solution of H₂O₂ was added to achieve a fixed ratio H₂O₂/organic compound.

Catalytic tests were carried out feeding 250 Ncc/min air at the bottom of the stainless steel sealed photoreactor. Gas which evolved from the sealed photoreactor during the reaction was analysed by CO/CO₂ IR analyser. Catalytic tests were carried out at temperature of 25°C and atmospheric pressure. The initial pH of the solution was adjusted by adding HCl or NaOH to achieve the required value.

The Total Organic Carbon (TOC) was evaluated by COₓ emission obtained by catalytic combustion at T=850°C. H₂O₂ concentration was determined by H₂O₂/TiOSO₄ complex (λ = 405 nm) UV-Vis analyses by using a Perkin-Elmer Lambda 35 spectrophotometer. Leaching tests were carried out to check the potential of leaching of the metals from the perovskite during the catalytic tests, analysing the model solution or synthetic winery wastewater by using ICP-AES Varian "Liberty II".

### EXAMPLE1

### Effect of the pH

The influence of pH on acetic acid degradation in presence of LaMnO₃ catalyst was shown in **TABLE 2** below. The experiments were carried out at pH= 3.9, 6.0 and 8.0 and R= H₂O₂/CH₃COOH=4. The maximum degree of total organic carbon removal (TOC removal, % = 57 %) is observed at pH= 6.0. Raising the pH further (equal to 8) brings total organic carbon removal down 22%. At pH=6, H₂O₂ conversion is slower than at pH=3.9, while in more alkaline conditions, decomposition is faster but incomplete (70%).

In homogeneous systems, pH=3-4 is known to be the optimal value for the photo-Fenton reaction.

A small dissolution of Mn on the perovskite is observed, varying the pH.
(Table 2 follows)

**TABLE 2**

| Influence of pH on the total organic carbon removal over LaMnO₃ during the photo-Fenton reaction. | | | |
|---|---|---|---|
| **Time (h)** | **TOC removal, %** | | |
| | **pH=3.9** | **pH=6.0** | **pH=8.0** |
| 0 | 0 | 0 | 0 |
| 1 | 10 | 32 | 10 |
| 2 | 34 | 42 | 22 |
| 3 | 47 | 55 | 22 |
| 4 | 52 | 57 | 22 |

### EXAMPLE 2

### The effect of H₂O₂ concentration on the photo-Fenton reaction

The degradation of acetic acid over LaMnO₃ at pH=3.9 with different initial hydrogen peroxide concentration was studied; particularly, by varying the molar ratio R=H₂O₂/CH₃COOH from 2 to 8 (see **TABLE 3**).

By increasing molar ratio R, the initial TOC removal rate decreases while final TOC abatement increases, due to increased OH^{.} radicals in solution. Finally, It is observed a small dissolution of Mn on the perovskite after the reaction.

**TABLE 3**

| Effect of the hydrogen peroxide concentration on photo-Fenton reaction over LaMnO₃ | | | |
|---|---|---|---|
| **Time (h)** | **TOC removal,%** | | |
| | **R=2** | **R=4** | **R=8** |
| 0 | 0 | 0 | 0 |
| 1 | 21 | 10 | 7 |
| 2 | 31 | 34 | 24 |
| 3 | 33 | 47 | 35 |
| 4 | 33 | 52 | 53 |
| 5 | 33 | 54 | 60 |

### EXAMPLE 3

### The effect of H₂O₂ dosage

To render the photo-Fenton processes competitive with other processes, it is essential that their applications represent a low cost operation, which basically implies a low consumption of H₂O₂. Controlled concentration of H₂O₂ permits higher TOC reductions in shorter times, owing to the H₂O₂ "auto-scavenger" effect that traps OH^{.} generated by photolysis. OH^{.} radicals react with H₂O₂ to form HO₂^{.} which are less reactive than OH^{.} radicals and thus not suitable for degradation of pollutants in solution.

As a consequence, high initial levels of H₂O₂^{.} do not lead to that can be employed OH^{.} useful for the photo-Fenton reaction, but low levels do not produce sufficient OH^{.} for the reaction. So it seems necessary to perform the reaction with an adjusted concentration of H₂O₂ during all of the reaction time. To this purpose, the objective of this evaluation is to select the best operational dosage of H₂O₂ in photo-Fenton processes.

In the photo-Fenton oxidation of acetic acid with LnFeO₃ (88%), the global gradual addition of H₂O₂ in the range C_{H2O2}/t = 0.01 M/h÷0.1 M/h, preferably C_{H2O2}/t=0.022 M/h, increases total organic removal from 29% obtained at initial molar ratio H₂O₂/CH₃COOH =4 up to 100%, with a minimum specific consumption of H₂O₂ (see **TABLE 4** below); particularly, it is varied in the 1 g_{H2O2}/g_{c} - 10 g_{H2O2}/g_{c} range. Finally, a negligible dissolution of iron on the perovskite after the reaction is observed.
(Table 4 follows)

**TABLE 4**

| Comparison of hydrogen peroxide consumption of the photo-Fenton system with LnFeO₃ (88%) with dosage of H₂O₂ with respect to the photo/LnFeO₃ system with H₂O₂/CH₃COOH=4 | | | | |
|---|---|---|---|---|
| **TOC removal, %** | **Dosage H₂O₂ cons, ppm** | **Dosage H₂O₂ cons., g_{H2O2}/g_{c}** | **No dosage H₂O₂ cons., ppm** | **No dosage H₂O₂ cons., g_{H2O2}/g_{c}** |
| 20 | 446 | 4.5 | 2604 | 26.4 |
| 60 | 2453 | 8.2 | - | - |
| 100 | 3814 | 7.6 | - | - |

### EXAMPLE 4

### Evaluation of mineralization in the photo-Fenton reaction

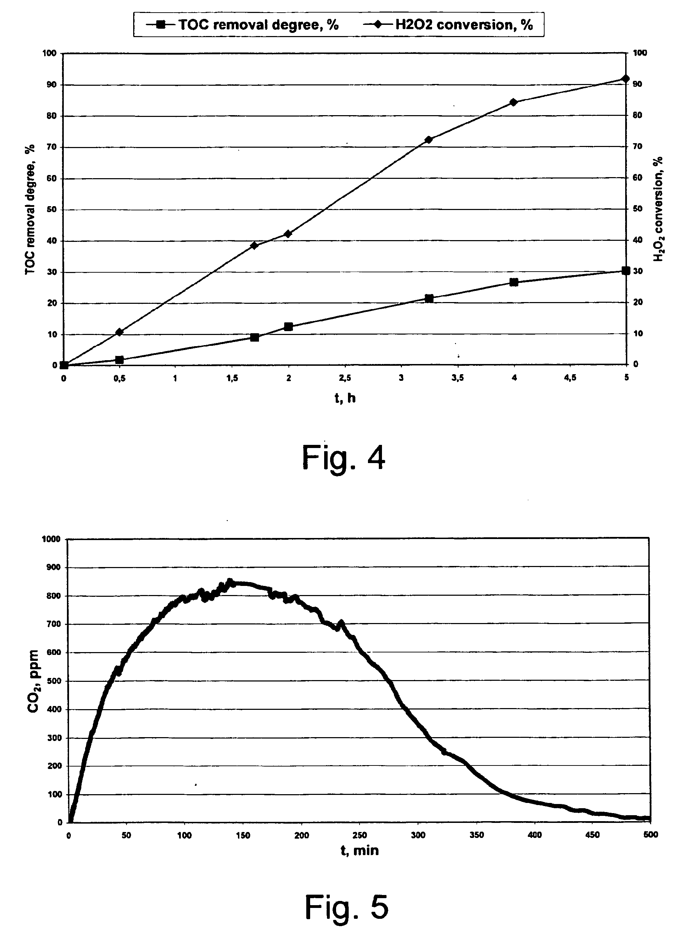

To evaluate the degree of mineralization, catalytic tests of acetic acid oxidation (R=4), in presence of LaMnO₃ were carried out feeding 250 Ncc/min of nitrogen at the bottom of the stainless steel sealed photo-reactor. After 5 hours of irradiation, a TOC removal of 30% (**Figure 4**) was observed.

In **Figure 5** the concentration of CO₂ detected in the gas phase during the photo-Fenton reaction on LaMnO₃ is shown. No formation of CO was observed. CO₂ concentration reached a maximum value of about 850 ppm, after an irradiation time of 150 min and then decreased to 0 ppm after 500 min evidencing the stripping completion of CO₂ produced.

Moreover, from the values of TOC removal and carbon dioxide concentration formed, the total carbon mass balance was closed to about 98%. This indicates that complete mineralization of acetic acid is obtained in photo-Fenton oxidation.

### EXAMPLE 5

### Evaluation of catalyst stability

The stability of the catalytic system has been studied taking as model the supported catalyst LaMnO₃ (3.67%) based on cordierite, for various cycles (up to 250 hours of run time) of photo-oxidation of the acetic acid with the same catalyst at similar experimental conditions (H₂O₂/CH₃COOH=4). It is noted that the catalyst regenerated at T=120°C, reused for the oxidation of acetic acid, shows the same extent of activity as the fresh catalyst. Finally, a negligible dissolution of Mn on the perovskite after the reaction is observed.

In summary, the use of the heterogeoeus catalyst and treatment method as proposed according to the present invention clearly shows the following advantages:
- an easy and simple preparation of the perovskite-based catalysts for the photo-Fenton reaction;
- the different reaction parameters, such as the effect of pH, H₂O₂ concentration and H₂O₂ dosage are optimised, and they have been adapted to easily extend the application of the method to the treatment of non-biodegradable industrial wastewater;
- the perovskite-based catalysts show high activity for degradation of acetic acid at pH=6;
- the perovskite-based catalysts show high ability to mineralize the organic pollutant, also at room temperature and atmospheric pressure;
- the perovskite-based catalysts, in the structured honeycomb monolith form, show in the photo-Fenton reaction an efficiency higher than homogeneous photo-Fenton systems;
- the perovskite catalysts and H₂O₂ show a synergistic effect, through the adsorption of pollutant molecules on the monolith surface, thus enhancing an increase of the degradation rate of the organic pollutant;
- the present invention provides an eco-friendly method to create a photo-Fenton heterogeneous system by using a stable and efficient photo-Fenton catalyst for the treatment of non-biodegradable wastewater.

The present invention has been disclosed with particular reference to some specific embodiments thereof, but it should be understood that modifications and changes may be made by the persons skilled in the art without departing from the scope of the invention as defined in the appended claims.

## Claims

1. Use of a heterogeneous catalyst for the degradation of organic compounds in wastewater by a photo-Fenton system, wherein said heterogeneous catalyst is a perovskite-based catalyst.

2. Use according to claim 1, wherein said heterogeneous catalyst is a structured honeycomb monolith consisting of a perovskite-based material.

3. Use according to claim 1, wherein said heterogeneous catalyst is a supported catalyst, consisting of a structured honeycomb monolith made of a refractory carrier or a foam impregnated with a solution of salts corresponding to the desired perovskite.

4. Use according to claim 3 wherein said refractory carrier is cordierite.

5. Use according to claims 3 or 4, wherein said refractory carrier or foam is further impregnated with a solution of noble metal.

6. Use according to claim 2, wherein the perovskite loading on the catalyst is the range 2-90 wt%.

7. Use according to claims 3, 4 or 5, wherein the perovskite loading on the supported catalyst is the range 2-30 wt%.

8. Use according to claim 5, wherein the noble metal loading on the supported catalyst is in the range 0,05-10 wt%.

9. Use according to any one of claims 1-8, wherein said perovskite has the formula LnFeO₃ wherein Ln is an element selected from the group III B of the periodic table of elements, including lanthanoids or a mixture thereof.

10. Use according to any one of claims 1-8, wherein said perovskite has the formula LaMeO₃ wherein Me is a transition element selected from the group consisting of Mn, Co, Fe, Ni and Cu or a mixture thereof.

11. A method for the treatment of wastewater by photocatalytic degradation of organic contaminants contained therein, wherein said wastewater undergoes a photo-Fenton oxidation reaction employing a heterogeneous catalyst, **characterized in that** said heterogeneous catalyst is a perovskite-based catalyst.

12. A method according to claim 11, wherein said heterogeneous catalyst is a structured honeycomb monolith consisting of a perovskite-based material.

13. A method according to claim 11, wherein said heterogeneous catalyst is a supported catalyst, consisting of a structured honeycomb monolith made of a refractory carrier or a foam impregnated with a solution of salts corresponding to the desired perovskite.

14. A method according to claims 11, 12 or 13, wherein said photo-Fenton oxidation reaction is carried out at room temperature and atmospheric pressure.

15. A method according to any one of claims 11-14, wherein said photo-Fenton oxidation reaction is carried out at a pH of greater than 5.

16. A method according to any one of claims 11-15, wherein the organic contaminants are acetic acid, MTBE, ethanol, methanol, their mixtures or winery wastewaters.

17. A method according to any one of claims 11-15, wherein said photo-Fenton oxidation reaction is carried out in a tubular fixed bed irradiated recirculated reactor.

18. A method according to any one of claims 11-17, wherein hydrogen peroxide is dosed to the photo-Fenton oxidation reaction during the process.

19. A method according to claim18, wherein said dosing is obtained through addition of discrete volumes of concentrated H₂O₂ solution to said process at fixed intervals.

20. A method according to claim18, wherein said dosing is obtained through continuous feeding of concentrated H₂O₂ solution to said process during said process.

## Patentansprüche

1. Verwendung eines heterogenen Katalysators zum Abbau organischer Verbindungen in Abwasser durch ein Photo-Fenton-System, wobei der heterogene Katalysator ein Katalysator auf Perovskit-Basis ist.

2. Verwendung nach Anspruch 1, wobei der heterogene Katalysator ein strukturierter Wabenmonolith ist, der aus einem Material auf Perovskit-Basis besteht.

3. Verwendung nach Anspruch 1, wobei der heterogene Katalysator ein geträgerter Katalysator ist, bestehend aus einem strukturierten Wabenmonolithen, der aus einem hitzebeständigen Träger oder einem Schaum, imprägniert mit einer Lösung von Salzen, die dem gewünschten Perovskit entsprechen, hergestellt ist.

4. Verwendung nach Anspruch 3, wobei der hitzebeständige Träger Cordierit ist.

5. Verwendung nach Anspruch 3 oder 4, wobei der hitzebeständige Träger oder der Schaum ferner mit einer Lösung eines Edelmetalls imprägniert ist.

6. Verwendung nach Anspruch 2, wobei die Perovskit-Beladung auf dem Katalysator im Bereich von 2 - 90 Gew.-% liegt.

7. Verwendung nach den Ansprüchen 3, 4 oder 5, wobei die Perovskit-Beladung auf dem geträgerten Katalysator im Bereich von 2 - 30 Gew.-% liegt.

8. Verwendung nach Anspruch 5, wobei die EdelmetallBeladung auf dem geträgerten Katalysator im Bereich von 0,05 - 10 Gew.-% liegt.

9. Verwendung nach irgendeinem der Ansprüche 1 - 8, wobei der Perovskit die Formel LnFeO₃ aufweist, wobei Ln ein Element, das aus der Gruppe IIIB des Periodensystems der Elemente, einschließlich Lanthaniden, ausgewählt ist, oder eine Mischung davon ist.

10. Verwendung nach irgendeinem der Ansprüche 1 - 8, wobei der Perovskit die Formel LaMeO₃ aufweist, wobei Me ein Übergangselement ist, das aus der Gruppe, die aus Mn, Co, Fe, Ni und Cu oder einer Mischung davon besteht, ausgewählt ist.

11. Verfahren zur Behandlung von Abwasser durch photokatalytischen Abbau von darin enthaltenen organischen Verunreinigungen, wobei das Abwasser eine Photo-Fenton-Oxidationsreaktion unter Einsatz eines heterogenen Katalysators erfährt, **dadurch gekennzeichnet, dass** der heterogene Katalysator ein Katalysator auf Perovskit-Basis ist.

12. Verfahren nach Anspruch 11, wobei der heterogene Katalysator ein strukturierter Wabenmonolith ist, der aus einem Material auf Perovskit-Basis besteht.

13. Verfahren nach Anspruch 11, wobei der heterogene Katalysator ein geträgerter Katalysator ist, bestehend aus einem strukturierten Wabenmonolithen, der aus einem hitzebeständigen Träger oder einem Schaum, imprägniert mit einer Lösung von Salzen, die dem gewünschten Perovskit entsprechen, hergestellt ist.

14. Verfahren nach den Ansprüchen 11, 12 oder 13, wobei die Photo-Fenton-Oxidationsreaktion bei Raumtemperatur und Atmosphärendruck durchgeführt wird.

15. Verfahren nach irgendeinem der Ansprüche 11 - 14, wobei die Photo-Fenton-Oxidationsreaktion bei einem pH-Wert von mehr als 5 durchgeführt wird.

16. Verfahren nach einem der Ansprüche 11 - 15, wobei die organischen Verunreinigungen Essigsäure, MTBE, Ethanol, Methanol, deren Mischungen oder Abwässer einer Weinkellerei sind.

17. Verfahren nach irgendeinem der Ansprüche 11 - 15, wobei die Photo-Fenton-Oxidationsreaktion in einem bestrahlten und rezirkulierenden Festbett-Tubularreaktor durchgeführt wird.

18. Verfahren nach irgendeinem der Ansprüche 11 - 17, wobei der Photo-Fenton-Oxidationsreaktion während des Prozesses Wasserstoffperoxid zudosiert wird.

19. Verfahren nach Anspruch 18, wobei die Dosierung durch Zugabe diskreter Volumina an konzentrierter H₂O₂-Lösung zu dem Prozess in festgelegten Intervallen erhalten wird.

20. Verfahren nach Anspruch 18, wobei die Dosierung durch kontinuierliche Zufuhr konzentrierter H₂O₂-Lösung zu dem Prozess während des Prozesses erhalten wird.

## Revendications

1. Utilisation d'un catalyseur hétérogène pour la dégradation de composés organiques dans des eaux résiduaires par un système photo-Fenton, dans laquelle ledit catalyseur hétérogène est un catalyseur à base de perovskite.

2. Utilisation selon la revendication 1, dans laquelle ledit catalyseur hétérogène est un monolithe à structure en nid d'abeilles constitué d'un matériau à base de perovskite.

3. Utilisation selon la revendication 1, dans laquelle ledit catalyseur hétérogène est un catalyseur supporté, constitué d'un monolithe à structure en nid d'abeilles fait d'un support réfractaire ou d'une mousse imprégné d'une solution de sels correspondant à la perovskite souhaitée.

4. Utilisation selon la revendication 3, dans laquelle ledit support réfractaire est de la cordiérite.

5. Utilisation selon les revendications 3 ou 4, dans laquelle ledit support réfractaire ou ladite mousse est en plus imprégné d'une solution de métal noble.

6. Utilisation selon la revendication 2, dans laquelle le chargement de perovskite sur le catalyseur est dans la plage de 2 à 90 % en poids.

7. Utilisation selon les revendications 3, 4 ou 5, dans laquelle le chargement de perovskite sur le catalyseur supporté est dans la plage de 2 à 30 % en poids.

8. Utilisation selon la revendication 5, dans laquelle le chargement de métal noble sur le catalyseur supporté est dans la plage de 0,05 à 10 % en poids.

9. Utilisation selon l'une quelconque des revendications 1 à 8, dans laquelle ladite perovskite a pour formule LnFeO₃ où Ln est un élément choisi dans le groupe III B du tableau périodique des éléments, comprenant les lanthanides ou un mélange de ceux-ci.

10. Utilisation selon l'une quelconque des revendications 1 à 8, dans laquelle ladite perovskite a pour formule LaMeO₃, où Me est un élément de transition choisi dans le groupe constitué par Mn, Co, Fe, Ni et Cu ou un mélange de ceux-ci.

11. Procédé de traitement d'eaux résiduaires par la dégradation photocatalytique des contaminants organiques qu'elles contiennent, dans lequel lesdites eaux résiduaires subissent une réaction d'oxydation de type photo-Fenton utilisant un catalyseur hétérogène, **caractérisée en ce que** ledit catalyseur hétérogène est un catalyseur à base de perovskite.

12. Procédé selon la revendication 11, dans lequel ledit catalyseur hétérogène est un monolithe à structure en nid d'abeilles constitué d'un matériau à base de perovskite.

13. Procédé selon la revendication 11, dans lequel ledit catalyseur hétérogène est un catalyseur supporté, constitué d'un monolithe à structure en nid d'abeilles fait d'un support réfractaire ou d'une mousse imprégné d'une solution de sels correspondant à la perovskite souhaitée.

14. Procédé selon les revendications 11, 12 ou 13, dans lequel ladite réaction d'oxydation de type photo-Fenton est réalisée à la température ambiante et à la pression atmosphérique.

15. Procédé selon l'une quelconque des revendications 11 à 14, dans lequel ladite réaction d'oxydation de type photo-Fenton est réalisée à un pH supérieur à 5.

16. Procédé selon l'une quelconque des revendications 11 à 15, dans lequel les contaminants organiques sont l'acide acétique, le MTBE, l'éthanol, le méthanol, leurs mélanges ou les eaux résiduaires d'un établissement vinicole.

17. Procédé selon l'une quelconque des revendications 11 à 15, dans lequel ladite réaction d'oxydation de type photo-Fenton est réalisée dans un réacteur tubulaire à lit fixe, exposé à rayonnement et de type à recirculation.

18. Procédé selon l'une quelconque des revendications 11 à 17, dans lequel le peroxyde d'hydrogène est dosé par rapport à la réaction d'oxydation de type photo-Fenton pendant le processus.

19. Procédé selon la revendication 18, dans lequel ledit dosage est obtenu par l'intermédiaire de l'addition de volumes discontinus de solution de H₂O₂ concentrée audit processus à intervalles fixes.

20. Procédé selon la revendication 18, dans lequel ledit dosage est obtenu par l'intermédiaire de l'alimentation continue dudit processus en solution de H₂O₂ concentrée pendant ledit processus.
